# EUROPÄISCHE PATENTSCHRIFT

(11) **EP 0 423 426 B1**
(45) Veröffentlichungstag und Bekanntmachung des Hinweises auf die Patenterteilung: **18.05.1994**
(21) Anmeldenummer: 90111029.6
(22) Anmeldetag: 12.06.1990
(51) Int. Cl.: B23B 21/00, B23Q 1/20, B23B 29/12

(54) **Werkzeugtraeger für automatische Drehmaschinen**
Tool holder for autolathes
Porte-outil pour tours automatiques

(30) Priorität: 20.10.1989 IT 2207889
(43) Veröffentlichungstag der Anmeldung: 24.04.1991
(73) Patentinhaber: GILDEMEISTER ITALIANA S.p.A., I-24030 Brembate di Sopra (IT)
(72) Erfinder: Ronzoni, Enrico, I-24030 Brembate Sopra (IT)
(74) Vertreter: Mayer, Hans Benno, Dipl.-Ing.

(56) Entgegenhaltungen:
- AT-B- 268 825
- DD-A- 228 481
- DE-A- 1 602 917
- DE-A- 3 110 673
- GB-A- 1 395 716

## Beschreibung

Die vorstehende Erfindung betrifft einen Werkzeugtraeger fuer eine automatische Drehmaschine gemäß dem Oberbegriff des Anspruchs 1. (siehe Prospekt Göltenbodt: "Schnellwechselhalter für Drehautomaten).

Aus dem Stand der Technik sind bereits Werkzeugtraeger bekannt geworden, die aus einem Werkzeughalter bestehen, der das zu verwendende Werkzeug aufnimmt. Der Werkzeughalter wird zusammen mit dem Werkzeug an einer entsprechenden Aufnahmevorrichtung der automatischen Drehmaschine befestigt.

Bei Verwendung dieser bekannten Werkzeugtraeger wird eine Verbesserung der Produktivitaet der Maschine erzielt, ferner koennen voreingestellte Werkzeuge (pre-setting) verwendet werden, was zu einer schnellen Montage mit groesster Praezision des Werkzeuges in der Maschine fuehrt. Durch die Verkuerzung der Ruestzeiten der Maschine und einer Verminderung der Totzeiten, die fuer den Werkzeugwechsel bisher unumgaenglich waren, wird eine Verminderung der Maschinenstillstandszeiten und somit eine groessere Ausnutzung der Fertigungsmittel erreicht.

Besonders bei Mehrspindeldrehmaschinen, in denen fuenf bis fuenfzehn unterschiedliche Werkzeuge zum Einsatz kommen, ist es besonders wichtig, die zahlreichen verwendeten Werkzeuge mit einem Minimum an Zeitaufwand auszutauschen.

Es ist bereits ein Schnellwechselwerkzeughalter bekannt geworden, bei dem die Lageanordnung der Werkzeuge gegenueber dem zu bearbeitenden Werkstueck unter Zuhilfenahme von geschliffenen saeulenartigen Auflagen erfolgt. Mit diesen saeulenartigen Bauteilen wird eine Aufnahmevorrichtung die entsprechend ausgebildete Ausnehmungen aufweist, in Verbindung gebracht.

Auf der Aufnahmevorrichtung der Werkzeugmaschine werden die bekannten Werkzeughalter unter Zuhilfenahme von Spannmitteln, die parallel zur Achse des zu bearbeitenden Werkstueckes ausgerichtet sind, z. B. unter Zuhilfenahme der saeulenfoermigen Bauteile festgespannt. Beruecksichtigt man, dass bei dieser Ausfuehrungsform sowohl die saeulenartigen Bauteile als auch die Spannmittel stets parallel zur Achse des zu bearbeitenden Werkstueckes ausgerichtet sind, tritt der Nachteil ein, dass waehrend des Spannvorganges des Werkzeughalters ein nicht zu vermeidendes Schraegstellen des Werkzeughalters gegenueber der Laengsachse des zu bearbeitenden Werkstueckes eintritt. Diese Tatsache fuehrt zu erheblichen Ungenauigkeiten bei der Bearbeitung des Werkstueckes mit dem spanabhebenden Werkzeug.

Ferner haben die bekannten Werkzeughalter den Nachteil, dass eine Demontage der Spannmittel und des Werkzeughalters nur in Richtung der Laengsachse des Werkstueckes erfolgen kann, das heisst in Richtung der Laengsachse der Drehmaschine. Diese Notwendigkeit, die bei der Montage und Demontage des Werkzeughalters auftritt, bringt erhebliche Nachteile mit sich, da seitlich zu den Aufnahmen der Werkzeughalter Hilfsvorrichtungen fuer die Maschine vorgesehen sind, die eine freien und schnellen Demontage der Werkzeugtraeger entgegenstehen (Prospekt Göltenbodt, "Schnellwechselhalter für Drehautomaten")
Aufgabe der vorstehenden Erfindung ist es, die Nachteile des Standes der Technik zu vermeiden und einen Werkzeughalter vorzuschlagen, der mit groesserer Genauigkeit an der entsprechenden Halterung der Werkzeugmaschine montierbar ist und dass eine Lageanordnung des Werkzeuges genau parallel zur Achse des zu bearbeitenden Werkstueckes moeglich wird, dass der Werkzeughalter fest auf der gesamten Auflageflaeche der Aufnahmevorrichtung spannbar ist und eine rasche Montage bzw. eine rasche Demontage der Spannmittel unter Durchfuehrung einer senkrechten Bewegung gegenueber der Werkstueckachse moeglich wird.

Diese Aufgabe wird bei einem Werkzeugträger gemäß dem Oberbegriff des Anspruchs 1 dadurch geloest, dass von der Auflageflaeche des Werkzeughalters eine Leiste absteht, die parallel zur Achse des zu bearbeitenden Werkstueckes angeordnet ist und mit einer, in den Koerper der Aufnahmevorrichtung, eingearbeiteten Nut verbindbar ist, wobei die Aufnahmevorrichtung mehrere, parallel nebeneinander angeordnete Spannuten aufweist, die parallel zu einer Senkrechten zur Achse des Werkstueckes angeordnet sind, und diese Nuten Spannleisten aufnehmen, mit denen Schrauben zum Festlegen des Werkzeughalters auf der Aufnahmevorrichtung verbindbar sind.

Der Werkzeughalter dieser Art kann mit groesstmoeglicher Geschwindigkeit in seiner Benutzungslage montiert werden, indem die vom Werkzeughalter abstehende Leiste mit der Nut der Aufnahmevorrichtung der Maschine in Wirkverbindung gebracht wird. In dieser Nut kann der Koerper des Werkzeughalters frei verschoben werden, um eine Lagejustierung gegenueber der Aufnahmevorrichtung vorzunehmen.

Im Anschluss wird durch Einfuegen der entsprechenden Befestigungsleisten in senkrechter Richtung zur Werkstückachse (X) und unter Zuhilfenahme von Schrauben ein sicheres Verspannen des Werkzeughalters auf der Aufnahmevorrichtung der Maschine vorgenommen.

Durch Vorsehen einer langen Fuehrungsnut in der fest angeordneten Aufnahmevorrichtung der Maschine, (Fuehrungsnut, die als Praezisionsfuehrung ausgebildet ist und parallel zur Achse (X) des zu bearbeitenden Werkstueckes angeordnet ist) sowie durch Vorsehen von Nuten fuer das Einfuehren von Spannleisten, die senkrecht zur Werkstueckachse angeordnet sind, wird eine hochpraezise Lageanordnung des voreingestellten Werkzeuges (pre-setting) gegenueber dem Werkstueck erreicht, ferner erfolgt ein starres und hochgenaues Spannen des Werkzeughalters, ohne unerwuenschte Verwindungen, gegenueber der Aufnahmevorrichtung.

Die Verbindung zwischen der vom Werkzeughalter abstehenden Leiste und der Nut der Aufnahmevorrichtung erfolgt durch eine einfache von oben durchgefuehrte Bewegung. Das Einfuehren der T-foermigen Spannleisten in die entsprechenden Nuten der Aufnahmenvorrichtung erfolgt parallel zu einer Senkrechten zur Werkstueckachse (X). Die T-foermigen Leisten oder Keile werden von der Seite der Drehmaschine eingefuehrt, die vollstaendig frei von Baugruppen der Maschine ist und daher ein freies und rasches Arbeiten erlaubt.

Der Erfindungsgegenstand wird nun genauer anhand eines Ausfuehrungsbeispieles beschrieben und in den Zeichnungen dargestellt.

Es zeigen:
Fig. 1 schematisch die Aufnahmevorrichtung mit dem Werkzeughalter in einer Vorderansicht;
Fig. 2 die Aufnahmevorrichtung und den Werkzeughalter in einer Draufsicht;
Fig. 3 die Aufnahmevorrichtung und den Werkzeugtraeger in einer Ansicht gemaess Pfeil f der Fig. 2; und
Fig. 4 schematisch den Werkzeughalter in auseinandergezogener, perspektivischer Ansicht.

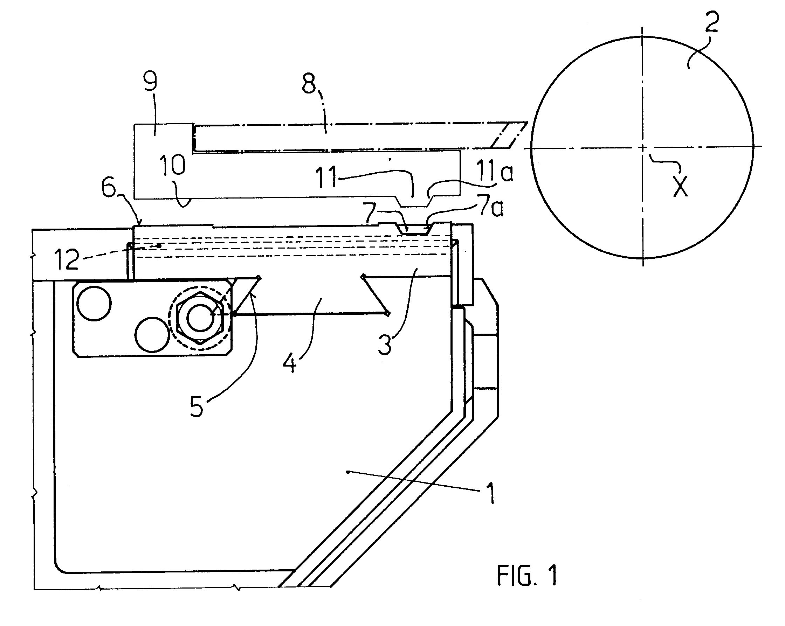

Der Fig. 1 kann eine bekannte und in Drehmaschinen uebliche Aufnahmevorrichtung fuer einen Werkzeughalter entnommen werden.

Bekannterweise sind mehrere Aufnahmevorrichtungen fuer verschiedene Werkzeughalter vorgesehen, die sternartig um die Laengsachse der Maschine angeordnet sind. Das Werkzeug jeder Aufnahmevorrichtung dient zur spanabhebenden Bearbeitung am zugeordneten Werkstueck 2, das von einer nicht dargestellten Maschinenspindel aufgenommen ist.

Die Aufnahmevorrichtung 1 weist eine Plattform 3 auf. Die Plattform 3 wird verschiebbar unter Zuhilfenahme einer Schwalbenschwanzfuehrung 4 und einstellbar von einer Schwalbenschwanzfuehrung 5 der Aufnahmevorrichtung 1 aufgenommen. Somit besteht die Moeglichkeit die Plattform 3 in Richtung der Achse X des Werkstueckes 2 einzustellen.

An seiner Oberseite weist die Plattform 3 eine Auflageflaeche 6 auf, die in vorteilhafter Weise als geschliffene Auflageflaeche ausgebildet ist. Die Plattform 3 weist an ihrer Vorderseite, d.h. auf der zum Werkstueck 2 gerichteten Seite eine Nut 7 auf, die parallel zur Achse X des Werkstueckes 2 ausgerichtet ist. Die Nut 7, die im Querschnitt Kegelstumpfform aufweist, hat nach unten geneigte Wandseiten 7a. Die Grundflaeche sowie die Seitenwaende 7a der Nut 7 sind in vorteilhafter Weise geschliffen.

Das Werkzeug 8 wird in bekannter Weise in voreingestellter Lage (pre-setting) im Koerper des Werkzeughalter 9 eingesetzt. Der Werkzeughalter 9 ist als Schnellwechselwerkzeughalter ausgebildet. Der Werkzeughalter 9 besteht im wesentlichen aus einem Koerper, der an seiner Unterseite eine geschliffene Flaeche 10 aufweist. An der Vorderseite des Werkzeughalter 9, die auf das zu bearbeitende Werkstueck 2 gerichtet ist, ragt vom Boden 10 eine Leiste 11 ab, die parallel zur Vorderseite des Werkzeughalters 9 angeordnet ist. Der Koerper des Werkzeugtraegers 9 sowie die abstehende Leiste 10 bilden eine Einheit.

Auch die Leiste 11 weist Kegelstumpfform auf und die Wandseiten 11a, die die Leiste 11 begrenzen, sind ebenfalls geschliffen. Die Neigung der Wandseiten 11a ist derartig gewaehlt, dass eine praezise Verbindung mit der Nut 7 der Plattform 3 herstellbar ist.

Durch Einsetzen der Leiste 11 in die Nute 7 wird nicht nur eine Auflage der Flaeche 10 des Werkzeughalters auf der Flaeche 6 der Plattform 3 erzielt, sondern auch eine formschluessige Praezisionsverbindung zwischen der Leiste 11 und der Nut 7. Dadurch erfolgt ein Ausrichten des Werkzeughalters 9 exakt parallel zur Laengsachse X des Werkstueckes 2.

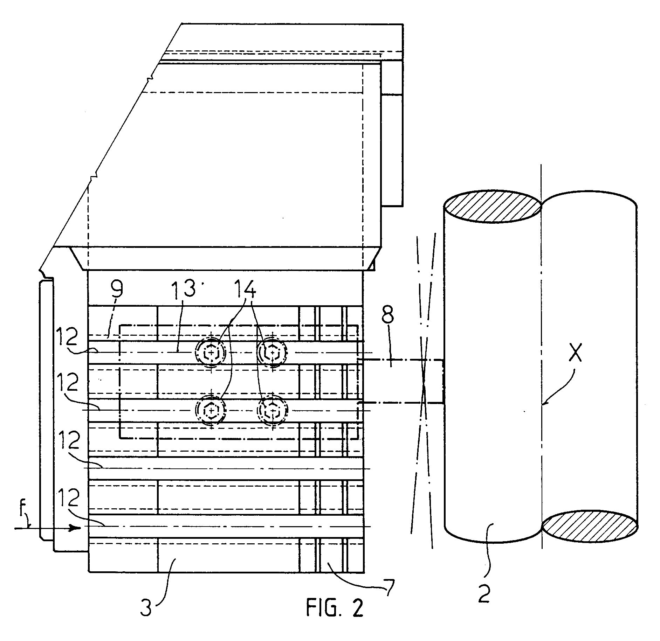

Die Plattform weist auch eine Anzahl von parallel angeordneten Nuten auf, die parallel zu einer Senkrechten zur Nut 7 und daher parallel zu einer Senkrechten zur Achse X des Werkstueckes 2 ausgerichtet sind. Wie der Fig. 2 noch zu entnehmen ist, erfolgt eine erste Lageausrichtung des nur schematisch dargestellten Werkzeughalters 9 (entsprechend seiner Breite) ueber den Nuten 12, die in vorteilhafter Weise als T-Nuten ausgebildet sind. Im Anschluss daran erfolgt ein Spannen des Werkzeughalters 9 unter Zuhilfenahme von T-foermigen Leisten 13, die mit Schrauben 14 verbunden werden.

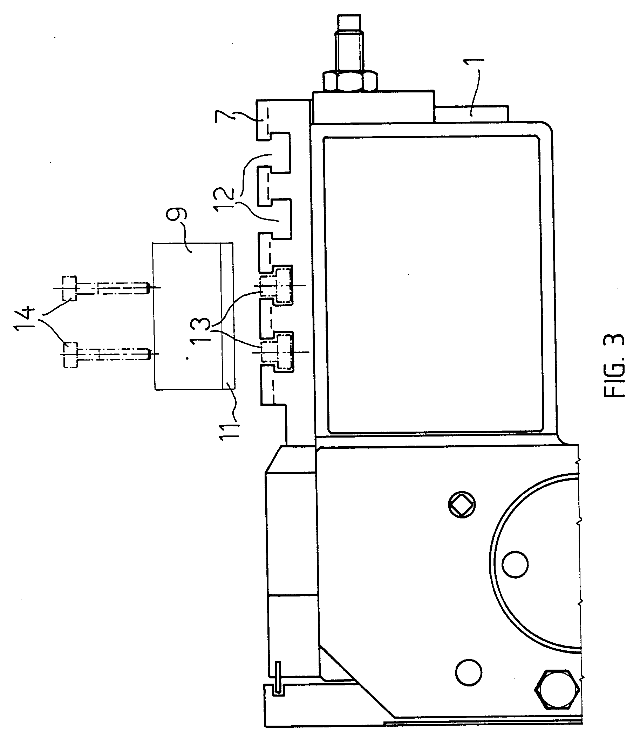

Den Figuren 1, 2 , 3 und 4 kann deutlich entnommen werden, dass die prismatisch ausgefuehrte Nut der Plattform 3 parallel zur Achse X des Werkstueckes 2 ausgerichtet ist. Durch die Kombination mit der prismatisch ausgefuehrten Leiste 11, die von der Unterseite des Werkzeughalters 9 absteht, wird eine hochpraezise Lageausrichtung des Werkzeuges gegenueber dem Werkstueck 2 vorgenommen. Sowohl die Nut 7 als auch die Leiste 11 koennen in einfacher und schneller Weise gereinigt und von eventuell abgelagerten Spaenen oder Schmutzteilen befreit werden. Es kann ein schnelles Einsetzen der eingestellten Werkzeuge 8 ohne zusaetzliche Hilfsmittel erfolgen. Nach Einsetzen des Werkzeughalters, werden die T-foermigen Leisten 13 in die Nuten 12 der Plattform 3 eingeschoben. Dadurch ist es moeglich, den Werkzeugtraeger 9 unter Zuhilfenahme von Schrauben 14 auf der Ebene 6 der Plattform 3 zu befestigen. Den Figuren 2, 3 und 4 kann entnommen werden, dass die Plattform 3 eine Mehrzahl parallel angeordneter Nuten 12 aufweist, die ueber die ganze Flaeche der Plattform 12 verteilt sind. Somit besteht die Moeglichkeit, die technisch guenstigste Lage des Werkzeughalters 9 gegenueber der Plattform 3, entsprechend den Abmessungen der Haltevorrichtung 9 sowie des Werkzeuges 8, auszuwaehlen.

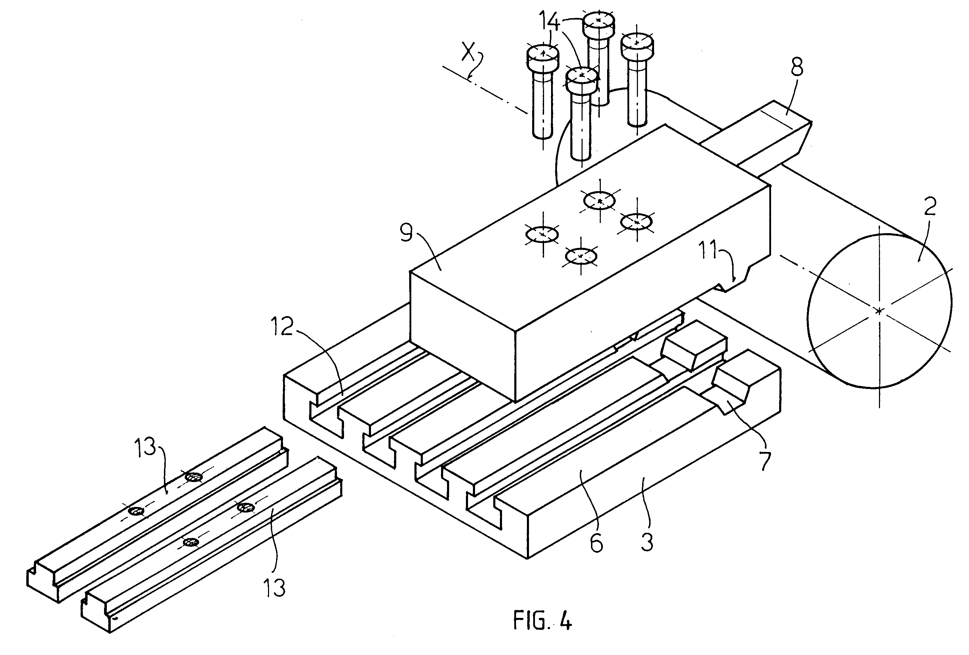

Wie besonders der Fig. 4 entnommen werden kann, sind die T-foermigen Nuten 12 parallel zu einer Senkrechten zur Achse X des zu bearbeitenden Werkstueckes 2 angeordnet. Es wird somit in vorteilhafter Weise moeglich, die T-foermigen Spannleisten 13 von der Aussenseite der Maschine in die Plattform 3 einzufuehren. Dadurch kann das Einfuehren der T-foermigen Spannleisten sehr schnell erfolgen. Da die Nuten 12 der Plattform 3 nicht wie bei bekannten Ausfuehrungsformen durch seitlich angeordnete Zusatzgeraete der Maschine versperrt werden, ist ein besonders einfaches, unbehindertes Einsetzen der Spannleisten 13 moeglich.

## Patentansprüche

1. Werkzeugtraeger fuer eine automatische Drehmaschine, bestehend aus einem Werkzeughalter (9), der mit einer, im Koerper einer Aufnahmevorrichtung (1) der Maschine vorgesehenen Ausnehmung (7) verbindbar ist und ueber Schraubverbindungen (13, 14) loesbar mit der Aufnahmevorrichtung (1) verspannbar ist, **dadurch gekennzeichnet,** dass von der Auflageflaeche (10) des Werkzeughalters (9) eine Leiste (11) absteht, die parallel zur Achse (X) des zu bearbeitenden Werkstueckes (2) angeordnet ist und mit einer, in den Koerper der Aufnahmevorrichtung (1), eingearbeiteten Nut (7) verbindbar ist, wobei die Aufnahmevorrichtung (1) mehrere, parallel nebeneinander angeordnete Spannuten (12) aufweist, die parallel zu einer Senkrechten zur Achse (X) des Werkstueckes (2) angeordnet sind, und diese Nuten (12) Spannleisten (13) aufnehmen, mit denen Schrauben (14) zum Festlegen des Werkzeughalters (9) auf der Aufnahmevorrichtung (1) verbindbar sind.

2. Werkzeugtraeger, nach Patentanspruch 1, **dadurch gekennzeichnet**, dass die parallel zur Achse (X) des zu bearbeitenden Werkstueckes (2) angeordnete Nut (7) prismatischen Querschnitt aufweist.

3. Werkzeugtraeger, nach Patentanspruch 1, **dadurch** **gekennzeichnet,** dass die parallel zur Achse (X) des Werkstueckes (2) angeorndete Nut (7) im Querschnitt Kegelstumpfform aufweist, und die seitlich angeordneten Begrenzungswaende (7a) sich nach unten verjuengend ausgebildet sind.

4. Werkzeugtraeger, nach Patentanspruch 1, **dadurch gekennzeichnet,** dass die vom Koerper des Werkzeughalters (9) abstehende Leiste (11) einstueckig mit dem Werkzeughalter (9) ausgebildet ist.

5. Werkzeugtraeger, nach Patentanspruch 1, **dadurch gekennzeichnet,** dass die Spannuten (12) der Aufnahemvorrichtung (1), sowie die in die Nuten (12) einfuehrbaren Spannleisten (13) im Querschnitt T-Form aufweisen.

6. Werkzeugtraeger, nach Patentanspruch 1, **dadurch gekennzeichnet**, dass die Nuten (12) ueber die Flaeche (6) der Aufnahmevorrichtung (1) verteilt angeordnet sind.

7. Werkzeugtraeger, nach Patentanspruch 1, **dadurch gekennzeichnet,** daß die Spannleisten (13) von der Aussenseite der Maschine in die Spannuten (12) einfuehrbar sind.

## Claims

1. Tool carrier for an automatic lathe, comprising a tool holder (9), which can be connected to a recess (7) provided in the body of a receiving device (1) of the lathe and can be clamped, by means of screw connections (13, 14), detachably to the receiving device (1), characterized in that protruding from the bearing surface (10) of the tool holder (9) there is a bead (11), which is disposed parallel to the axis (X) of the workpiece (2) to be worked and can be connected to a groove (7) cut into the body of the receiving device (1), the receiving device (1) exhibiting a plurality of mutually parallel clamping grooves (12), which are disposed parallel to a perpendicular to the axis (X) of the workpiece (2), and these grooves (12) receive clamping beads (13), to which there can be connected screws (14) for securing the tool holder (9) on the receiving device (1).

2. Tool carrier according to Patent Claim 1, characterized in that the groove (7) disposed parallel to the axis (X) of the workpiece (2) to be worked exhibits a prismatic cross-section.

3. Tool carrier according to Patent Claim 1, characterized in that the groove (7) disposed parallel to the axis (X) of the workpiece (2) exhibits a frustoconical cross-section and the laterally disposed limit walls (7a) are configured such that they taper downwards.

4. Tool carrier according to Patent Claim 1, characterized in that the bead (11) protruding from the body of the tool holder (9) is configured in one piece with the tool holder (9).

5. Tool carrier according to Patent Claim 1, characterized in that the clamping grooves (12) of the receiving device (1), and the clamping beads (13) which can be introduced into the grooves (12), exhibit a T-shaped cross-section.

6. Tool carrier according to Patent Claim 1, characterized in that the grooves (12) are scattered over the surface (6) of the receiving device (1).

7. Tool carrier according to Patent Claim 1, characterized in that the clamping beads (13) can be introduced into the clamping grooves (12) from the outer side of the lathe.

## Revendications

1. Porte-outils pour un tour automatique, comprenant un support d'outil (9) qui peut être relié à un évidement (7) prévu dans le corps d'un dispositif de réception (1) de la machine et qui peut être serré amoviblement par des liaisons à vissage (13, 14) dans le dispositif de réception (1), caractérisé en ce qu'une barre (11) fait saillie de la surface d'appui (10) du support d'outil (9) qui est disposé parallèlement à l'axe (X) de la pièce de travail (2) à usiner et qui peut être relié à une rainure (7) pratiquée dans le corps du dispositif de réception (1), le dispositif de réception (1) présentant plusieurs rainures de serrage (12) disposées parallèlement les unes à côté des autres qui sont disposées parallèlement à une verticale à l'axe (X) de la pièce de travail (2), et ces rainures (12) reçoivent des barres de serrage (13) avec lesquelles on peut relier des boulons (14) pour fixer le support d'outil (9) sur le dispositif de réception (1).

2. Porte-outils selon la revendication 1, caractérisé en ce que la rainure disposée parallèlement à l'axe (X) de la pièce de travail (2) à usiner a une section transversale prismatique.

3. Port-outils selon la revendication 1, caractérisé en ce que la rainure (7) disposée parallèlement à l'axe (X) de la pièce de travail (2) a une forme tronconique en section transversale, et que les parois de délimitation (7a) disposées latéralement sont réalisées de façon à diminuer vers le bas.

4. Porte-outils selon la revendication 1, caractérisé en ce que la barre (11) faisant saillie du corps du support d'outil (9) est réalisée en une pièce avec le support d'outil (9).

5. Porte-outils selon la revendication 1, caractérisé en ce que les rainures de serrage (12) du dispositif de réception (1) ainsi que les barres de serrage (13) pouvant être insérées dans les rainures (12) ont une forme de T en section transversale.

6. Porte-outils selon la revendication 1, caractérisé en ce que les rainures (12) sont réparties sur la surface (6) du dispositif de réception (1).

7. Porte-outils selon la revendication 1, caractérisé en ce que les barres de serrage (13) peuvent être introduites depuis le côté extérieur de la machine dans les rainures de serrage (12).
